# EUROPEAN PATENT SPECIFICATION

(11) **EP 3 705 003 B1**
(45) Date of publication and mention of the grant of the patent: **10.11.2021**
(21) Application number: 19000112.3
(22) Date of filing: 05.03.2019
(51) Int. Cl.: A47J 37/04, A47J 37/10

(54) **VERTICAL ROTISSERIE APPARATUS WITH LIQUID POURING FOR BASTING**
VERTIKALE DREHSPIESSVORRICHTUNG MIT FLÜSSIGKEITSAUSGIESSEN ZUM ARROSIEREN
APPAREIL DE ROTISSERIE VERTICAL AVEC VERSEMENT DE LIQUIDE POUR BADIGEONNEMENT

(43) Date of publication of application: 09.09.2020
(73) Proprietor: Vandamme, Paul, 030772 Bucharest (RO)
(72) Inventor: Vandamme, Paul, 030772 Bucharest (RO)
(74) Representative: Ohan, Petre

(56) References cited:
- GB-A- 394 356
- US-A- 2 701 516
- US-A1- 2004 011 217

## Description

The invention relates to a vertical rotisserie apparatus equipped with means for pouring of a liquid, such as simple vegetable comestible oil or aromatized oil with powder made of crushed aromatized plants for improving the taste, basting and tenderizing of meat and/or vegetables during roasting process (roasting or baking), said means providing and recirculation of aromatizing liquid. More specific invention related to an improved vertical rotisserie apparatus by providing it with means for a basting or pouring of the liquid and an attached module for recirculation thereof (of said liquid). The apparatus is intended for being used especially within the catering field, as kitchen equipment.

There are known horizontal or vertical rotisserie units equipped with several spikes or baskets used for fixing the food to be roasted. Depending on thermal energy source, there are gas or electric vertical rotisserie units and they may be equipped with a drawer for keeping warm the roasted or baked products.

US patent No. 5460080 published on 24.10.1995 discloses a mobile rotisserie for mass cooking of edible vertebrate products, characterized by a wheel-mounted, open pit wherein a spit conveyor travels from end to end and plural spits engage the conveyor, the spits being rapidly rotated simultaneously as they travel the length of the rotisserie unit. Rotisserie Chicken Machine is adapted to portability upon a mobile wheeled trailer and consists of a cooking unit supported thereon. Within the trailer, main drive chains travel endlessly, responsive to driven front and rear shafts, both front and rear shafts being rotatable within shaft guides, which, in turn, are spaced by track spacers. A chain is employed as the conveyor, per se.

The front drive shaft has a centrally disposed driving sprocket which is held in position by the fixed track spacer connection. Spit rod carriers are fixed at spaced intervals to the conveyor chain, as indicated. The rod carriers and their supporting chain are driven by the motor, which rests upon a suitable motor bracket, shown attached to track spacer. There is provided a flat iron conveyor return track with channels set therein. Main chain idler brackets cooperate with sprocket brackets to effect movement to the conveyor chains. Suitable bridges are located to support and to separate the primary right hand driving chain from the secondary rotisserie driven chain, the latter having external disposition relative to main drive chain, reference right hand channel. Top track slidable supports this driven chain, lengthwise.

WO 2013/025988 published on 21.02.2013. The invention relates to a liquid removal device. Exemplary embodiments of the invention comprise a basket well that is configured to spin a basket containing fried food. The fryer device may also comprise a rotational mechanism, such as an electric motor or a manual crank, which rotates the basket within the basket well. The invention may further comprise a mechanism to dump food from the basket after sufficient liquid has been removed. Various embodiments also comprise a handle, which may or may not be integrated into the basket.

The Chinese utility model document No. CN203088802 U published on 31.07.2013, discloses an automatic oil-coating rotary multi-functional oven comprises a pot body, a pot cover and a heater, wherein the pot body is provided with a rotary basin for rolling food, and a relatively sealed cavity is defined by the pot body and the pot cover. The automatic oil-coating rotary multi-functional oven is characterized in that the rotary basin is designed to rotate at intervals, the rotary basin drives the food and oil when rotating, and when the rotary basin stops rotating, the food moves forwards or turns over due to inertia and is automatically mixed with the oil, and thus the oil is coated.

It is known invention No. FR 2823963 (A1), published on 31.10.2002, entitled "Spraying device for food in cooking oven ...". The oven comprises a casing inside which is housed a cooking enclosure delimited in its upper part by an arch, heating elements and food supports. The spraying device comprises a reservoir, located on top of the arch, which can be filled with liquid through an orifice in the casing surface. Calibrated spraying nozzles enable a regulated flow of the liquid contained in the reservoir through openings in the arch.

Patent No. CN 2894560Y discloses a fully automatic no-smoke cooking machine, which comprises a movable connection of a casing and an upper cover, a handle device on the upper side of the upper cover, and a motor connected to the bottom of the casing to control the disc and the air inlet are connected at the bottom of the casing, the exhaust window device is on the upper side of the upper cover, the frying pan is movably connected to the upper part of the heater and the middle of the casing, and the stirrer is movably connected to the upper end of the motor shaft and the bottom of the wok, the heater It is fixedly connected to the bottom of the inner cylinder and connected to the control panel. This kind of cooking machine connects the upper end of the motor shaft and the bottom of the wok by stirring the stirrer. Because the food is easily broken or chopped due to the stirring of food, especially the fragile food such as French fries, the cooking machine is not cleaned after the use of the accessories. Convenient and need improvement.

Patent specification No. GB 394,356 from 23.06.1933, discloses a cooking apparatus comprises a case containing an electric heater of square cross section surrounded by four or more horizontal blades, spears or spits each mounted at one end in a groove in one of the walls of the case and connected at the other end to a shaft having a cog-wheel fixed thereto on the outside of the casing whereby the spits &c may be rotated about their axes by a motor. One of the cogwheels is driven by reduction gearing in a casing, and a pulley from the motor, all the cog-wheels being then geared together by an endless chain. The chain also passes over a cog-wheel thereby also driving a second endless chain passing over cog-wheels on the inside of the casing; the second chain carries a group of ladles or buckets which scoop the drippings from a collector fixed to a pan, which collects the drippings at the base of the case. The buckets carry the drippings upwards into a top receptacle from which by way of feeders they are utilized to baste the cooking edibles rotating on the spits.

The technical problem solved by the invention consists in the recirculation of a liquid used for basting the rotisserie products by means of pouring, said liquid being previously homogenized, in a vertical rotisserie machine.

The rotisserie apparatus with a liquid pouring module, according to the present invention, is defined by its technical features highlighted in claims 1- 15.

As a result of applying the invention, the following advantages are obtained:
- ensures the automatized gravitational basting with liquids, such as oil, aromatized oil or liquid marinates, on the rotisserie contents (fresh grill food products, such as meat and vegetables), during the cooking process (roasting or baking), leading to a significant improvement of the taste of the rotisserie contents, for example, roasted meat and/or baked vegetables as a result of aromatizing and tenderizing;
- provides the continuous recirculation of aromatizing and tenderizing liquid; and
- allows the modernization of existing vertical rotisserie units/ grills.

Below you can find examples of materialization of the invention in connection to figures 1-13, representing:
- Fig. 1A, schematic view illustrating the main characteristics of the invention of the liquid recirculation module/unite and main additional elements required for improving a vertical rotisserie unit, according to the invention;
- Fig.1B, exploded view of a rotisserie/grill apparatus, according to the invention;
- Fig. 2, schematic view of the rotisserie unit from fig.1b;
- Fig.3, side view of a liquid homogenizer; in the preferred example there is presented a subassembly of a kind of spatula for liquid agitation/homogenization;
- Fig.4, detail illustrating the passing of the spatula from fig. 3 through a liquid receiving recipient;
- Fig.5, side view of a liquid transport container for the purpose of vertical recirculation;
- Fig.6A, perspective view illustrating the assembly of the liquid container from fig. 5 on a swivelling support bar;
- Fig.6B, front sectional view illustrating the liquid container from fig. 5 mounted on a swivelling support bar;
- Fig. 7, detail illustrating the liquid filling/charging of the vertical transport recipient, from fig. 5, upon its passing through the reservoir;
- Fig. 8, detail illustrating another variant of guiding the vertical transport recipient, from fig. 5, upon passing it through the reservoir;
- Fig.9, detail of an upper part of the liquid recirculation module, illustrating the liquid unloading/discharge from the vertical transport recipient, from fig. 5, into a removable container;
- Fig.10, perspective view of a liquid distributor (dripper);
- Fig.11, detail of the upper part of a rotisserie unit from fig.1B, illustrating the fixing of the liquid distributor from fig.10, the liquid circulation and its distribution over the food to be roasted;
- Fig.12, sketch illustrating the positioning of the liquid distributer from fig.10, in rotisserie unit from fig.1B;
- Fig. 13, perspective/exploded view illustrating the upper part of an improved rotisserie unit.

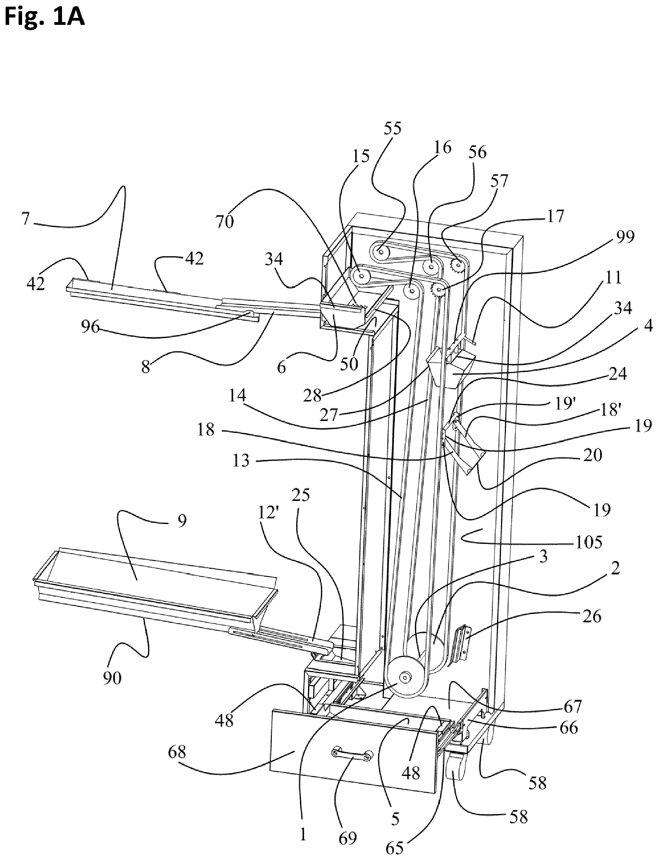

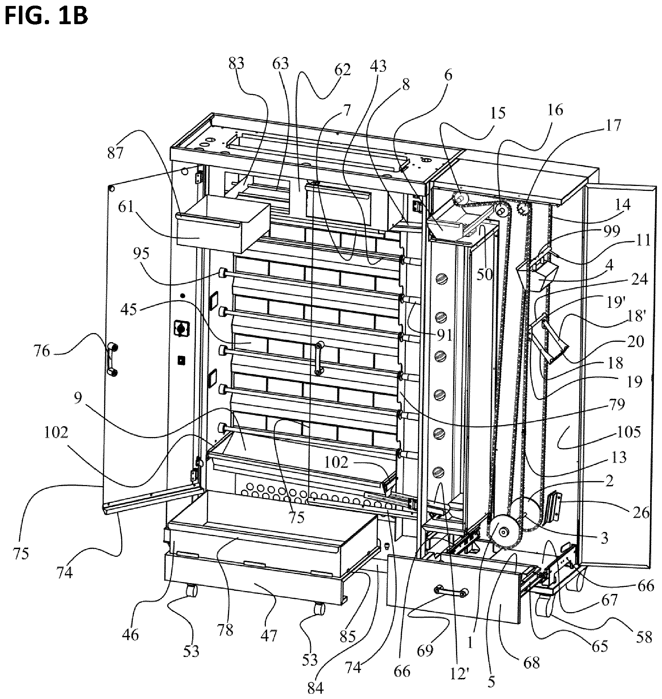

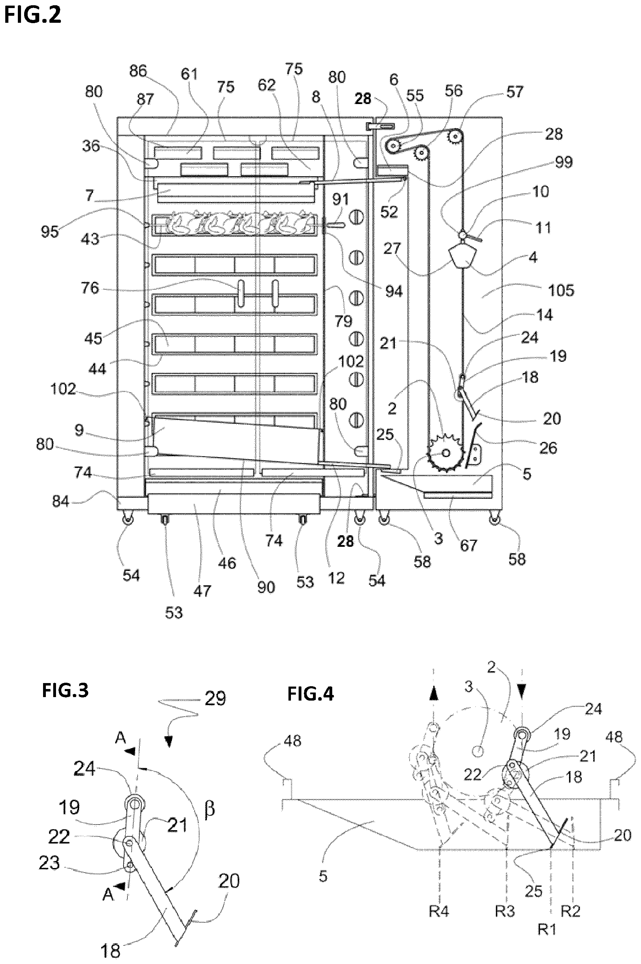

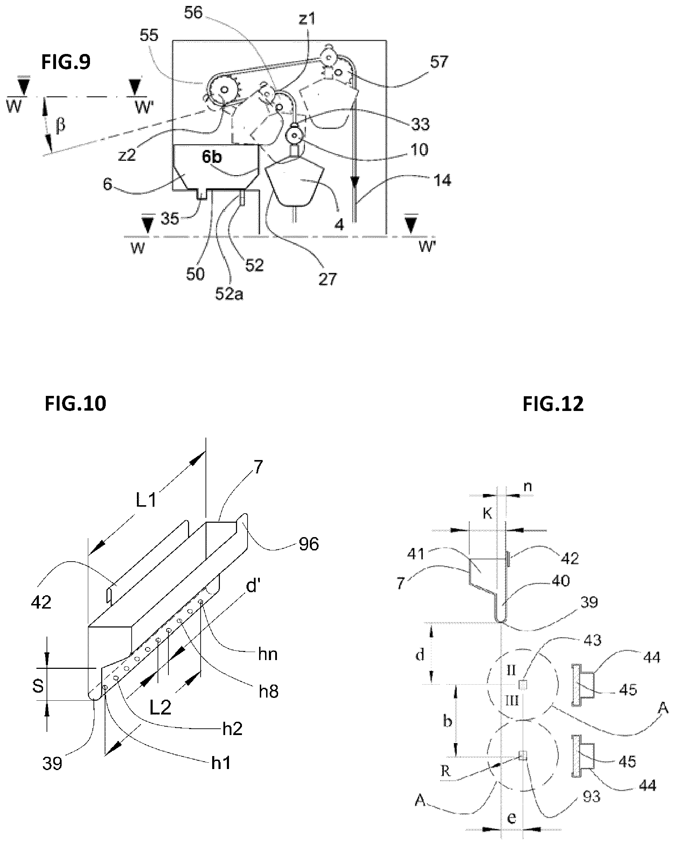

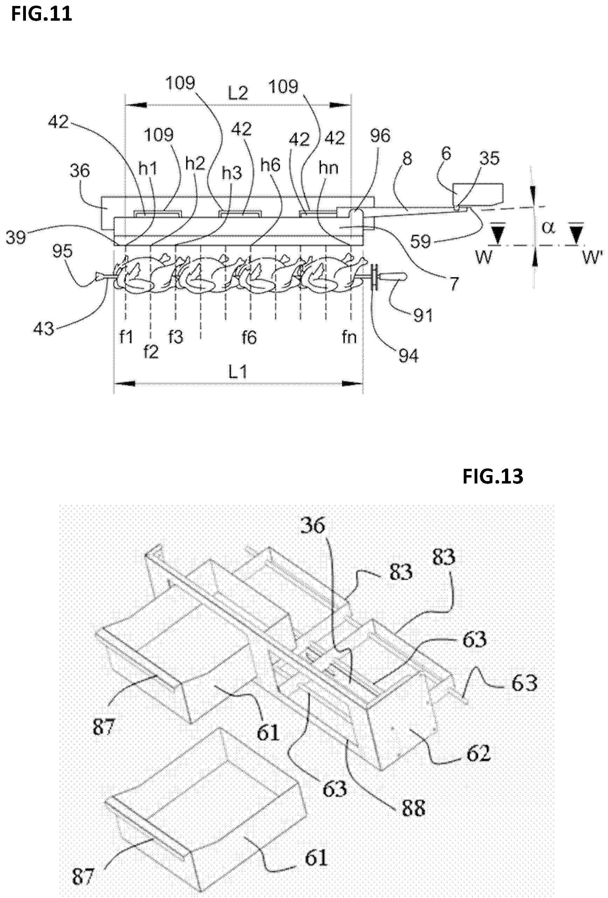

With regard to fig.1A *and* 1B, a rotisserie unit, according to the invention, consists in a vertical rotisserie unit or vertical grill with several horizontal spikes or baskets, vertically staggered, having a parallelepipedal form, known in itself, additionally equipped with a liquid distributor 7, which is an elongated recipient having a length smaller or equal to the length of the spikes, having at the bottom part some liquid draining orifices **h₁, h₂** ... **hₙ** for pouring liquid (fig. 10 and fig.11), located above first spike **43**, a liquid collector **9**, which is also an elongated recipient along the entire interior opening of rotisserie unit, for collecting the liquid leaking from rotisserie products, located underneath the last spike, having attached a recirculation module of the basting liquid (recirculation of a liquid used for basting the rotisserie products by means of pouring), an parallelepipedal form, containing a mechanism for transporting the liquid for recirculation purpose. In its turn, this mechanism contains two identical roller chains **13,14** with sprockets, located in planes parallel to front panels (but not presented in the figures) and back panel **105** of the liquid recirculating module, being driven and/or guided on pairs of sprockets **1-2**, **15-55**, **16-56** and **17-57**. Each pair of sprockets is mounted on an axis and the four axes are parallel to each other and perpendicular on the back panel **105** of the module. The lowest pair of sprockets **1-2** is mounted/fixed on an axis **3**, cylindrical joined, perpendicular to back panel **105** and front panel of the liquid recirculation module. The axis **3** is also driven by an engine, which is also not presented in the figure. The axis **3** is known also as driving axis. The other pairs of sprockets **15-55**, **16-56** and **17-57**, having a guiding role, are articulated on a pair of colinear semi-axes each (not presented in the figure), fixed on the front and back panels respectively as follows: the semi-axes supporting the guiding sprockets **55**, **56** and **57** of the roller chain **14** from the back side, have their heads fixed on the back panel **105** and the ones supporting the guiding sprockets **15**, **16** and **17** of the front roller chain **13**, have their heads fixed on the front panel. On the two roller chains **13**, **14** there are assembled (joined), by means of a swivelling support bar **10**, **24**, a container **4** for liquid transportation and a homogenizer **29** (a device for liquid mixing), preceding the container **4**, in the direction of movement. Generally, the container **4** for liquid transportation is a box having its upper part open (having a liquid loading/discharge opening), equipped with a handle **34** used for being mounted to the swivelling support bar **10**. Whenever the roller chains **13**,**14** are beginning to move, the container **4** takes over the liquid, in the inferior part of the stroke, from a reservoir **5**, having its upper part open, the pair of sprockets **1-2** being located above it. The reservoir **5** is initially filled, and afterwards filled with the liquid from liquid collector **9** by means of an elongated cylindrical orifice in form of a pipe 12 (fig. 2) and intermediary gutter **25**. The container **4** then lifts the liquid and, in the upper part of the stroke, discharges it in a removable recipient **6**, located in the upper part of the recirculation module, one of the pairs of sprockets **15-55** being located above the removable recipient **6**. This is a drain tray vessel having its upper part open, being provided at the base with an orifice for draining the liquid, using a removable gutter/ chamfer **8**, in distributor **7**. In this way, the mechanism for liquid transportation for the purpose of recirculation, ensures the taking over of the homogenized liquid from reservoir **5** into container **4**, its transport to the removable recipient **6**, and the discharge of the liquid from container 4 into the removable recipient **6**. The transport mechanism works periodically, on adjustable time intervals, but it may be started also in case of ordering it, makes a full drive and then it stops.

In another way of execution, the liquid from the liquid collector **9** gets in reservoir **5** by means of a draining orifice and sliding gutter 1**2'** whose useful length may be adjusted by sliding on the exterior part of the base (bottom) of the liquid collector **9**, and by means of the intermediary gutter **25**, taking over the liquid from the elongated cylindrical orifice **12** or from the sliding gutter **12'** and gets it to reservoir **5**.
Thanks to its construction, the liquid recirculation module may be attached to a vertical rotisserie unit, adapted so that the entire set is presented and works as a whole. If the liquid recirculation module is detached from the rotisserie unit, the liquid, which may be still found in the removable recipient **6**, flows directly in the intermediary gutter **25** and therefore gets into reservoir **5**.

In the concrete example of execution embodiment, the vertical rotisserie unit, adapted according to invention, has a parallelepipedal form and is equipped with: a heat chamber, having the oven role, located above the distributor **7** (right beneath the upper plate **86** of the rotisserie unit frame, fig.2); a box **46**, drawer type, for storing products, equipped with a handle 48, located on the support base 84 of the rotisserie unit frame beneath the liquid collector **9**, and two glass doors **75**, closing the grill in the area between upper support plate **86** and upper margin of the food storage box **46**. This heat chamber is heated by means convection from the burners **44**
The container **4** has the form of a right prism, overturned (having its height parallel to the swivelling support bar **10**), empty, having as basis an irregular hexagon consisting in two isosceles trapezes having in common the large basis, and rounded base edges. At the upper part, the container **4** is equipped with a handle **34**, (representing the narrowest lateral side of the prism), on both sides of the handle **34,** having the container open (the lateral sides of the adjacent prism are missing). In other words, the container **4** is a box having its upper part open, and its side walls having the form of an irregular hexagon symmetric to vertical.
The distributor **7** is equipped with a hooked plate **42,** hung by a support plate **36** equipped with an adequate slot. The support plate **36** is incorporated/fixed in the heat chamber of the modified grill (as presented in fig. 2, 11 and 13). The hooked plate **42** may be made of one piece or may be divided into two - three parts. Correspondingly, the support plate **36** is equipped with two or three slots **109** respectively, for passing the distributor's fixing hooks.

The liquid used for basting the rotisserie products by means of pouring, is, for example, simple vegetable comestible oil or aromatized oil with powder made of crushed aromatized plants, for improving the taste of meat and/or vegetables during roasting process (roasting or baking).

With regard to fig. 1b and fig. 2, the liquid recirculation module is assembled on four wheels **58** and by means of some fastening clamps **28** it is attached to an adapted vertical rotisserie unit, whose supporting base **84** is also assembled on four wheels **54**.
The modified rotisserie unit has at its upper part a liquid distributor/dropper **7**, and at its bottom part a recipient **9** for collecting the liquid (dripping from products or directly falling from distributor) which by means of two supports **102** are mounted in the lower part of the adapted grill unit. They are connected to the removable liquid recipient **6** and reservoir **5** respectively, from the liquid recirculation module. This allows that the liquid poured into the removable liquid recipient **6** of the liquid recirculation module is transferred through a removable gutter **8** towards distributor **7,** which by means of the draining orifices h₁, h₂ ... hₙ in its base plate **39** (as presented in fig. 10 and fig. 11), pours the liquid on the rotisserie contents (such as meat and/or vegetables), like a waterfall, on flow lines f1, f2,..., fn, (as presented in Fig.11). Finally, the liquid is poured into the liquid collector **9** of the adapted grill, which by means of the draining orifice **12,** sends back the liquid into reservoir **5** from the liquid recirculation module.

### Regarding liquid homogenizer and liquid stirring:

With regard to **fig.3****,** in a preferred example of execution, the liquid homogenizer **29** is a kind of comb-shaped spatula, comprising a spatula arm **18, 18',** in form of two identical, parallel plates (rectangular plates), having their bottom ends cut at an angle of 30 - 50° to the perpendicular on the plate's axis, having asymmetrically fixed a rectangular comb **20,** uniting the two plates forming the spatula's arm. The other end of the spatula's arm **18, 18'** is joined, by means of a swivelling axis **22** (each upper end of the two plates **18, 18'** forming the spatula's arm is swivelling/pivotally joined around the same axis **22,** located in the bottom part of the median area of the two supporting elements of the spatula's arm **19, 19'**. The mentioned spatula arm supports **19, 19'** have also the form of a plate, with rounded ends, having their upper ends mounted/fixed on the swivelling support bar **24** of the spatula. On the supporting elements of the spatula arm **19, 19'** there is mounted a counterweight **21** and rotation limiter **23** of spatula arm **18** around the swivelling axis **22** at an angle **β** between the longitudinal axis A-A' of the spatula arm support **19** and the spatula arm **18,** which is preferably smaller than 160 degrees.

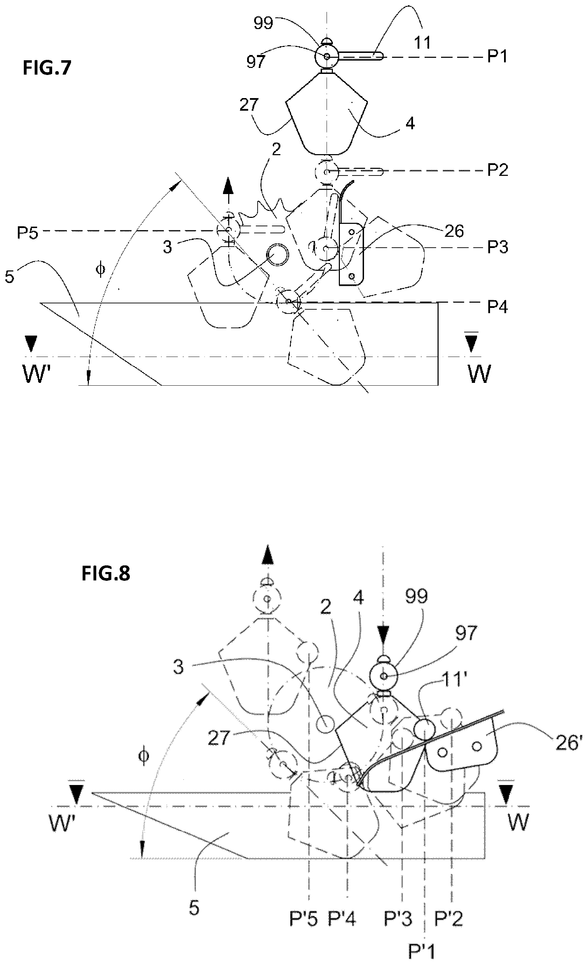

When the liquid homogenizer **29** freely hangs on the roller chains **13, 14,** the counterweight **21** ensure that line A- A', which is always parallel to the spatula's arm support **19, 19'** (representing its longitudinal axis), remains vertical, respectively in the vicinity of the perpendicular to a liquid level line from reservoir **5,** noted W-W' (fig.**7** and **8**), for ensuring the proper functioning of the liquid homogenizer **29**. In another variant, the same effect may be obtained without using the counterweight **21,** making the spatula arm support **19, 19'** very heavy in comparison to the spatula arm **18,18'** and comb **20**.

On the direction (rotation) of travel, the liquid homogenizer is mounted on the roller chains **13, 14,** before the container **4** for liquid transportation, ensuring in this way that the liquid from reservoir **5** is adequately stirred/homogenized before container **4** enters reservoir **5,** as presented in fig. 1A, 1B and fig2.

With regard to **fig.4****,** when the back (bottom part) of the comb **20** reaches the base/bottom of reservoir **5** of the liquid recirculation module, a situation illustrated in position **R1,** the swivelling support bar **24** of the liquid homogenizer **29** moves together with the roller chains **13,14,** then the comb's back moves backwards through the liquid homogenizer's arm **18,18**' scraping (getting into contact) with the base plate of the reservoir **5**, until reaches position R2. Further, the bottom part of the comb, starting from position R2 to R4, starts to scrap (gets into contact with) bottom plate of liquid reservoir **5**, in forward direction; as it moves together with the homogenizer, while the comb **20** starts to push the liquid from reservoir **5**, it passes also over the comb's teeth, causing a turbulence/agitation and makes the liquid and its contents from reservoir **5** to be stirred/homogenized before container **4** passes through liquid from reservoir **5**. The reservoir **5** has two handles **48**, which may be retractable or not and allow us to easily remove the reservoir **5** with or without the contents from the drawer **68**.
The contact between the comb **20** and the base plate of reservoir **5** cease once the bottom part of the comb reaches position R4 and the spatula moves together with the roller chains **13, 14**, because in position R4, neither part of the liquid homogenizer **29** has no longer additional contact with the base plate of the reservoir **5**. In the preferred example of execution, the reservoir **5** has the form of an opened parallelepipedal box, having one of the walls, the one corresponding to the exit of homogenizer **29** and container **4**, inclined towards the exterior having an angle between 30-60%, as presented in fig. 4, fig.7 and fig.8.

### Liquid collecting, transport and recirculation:

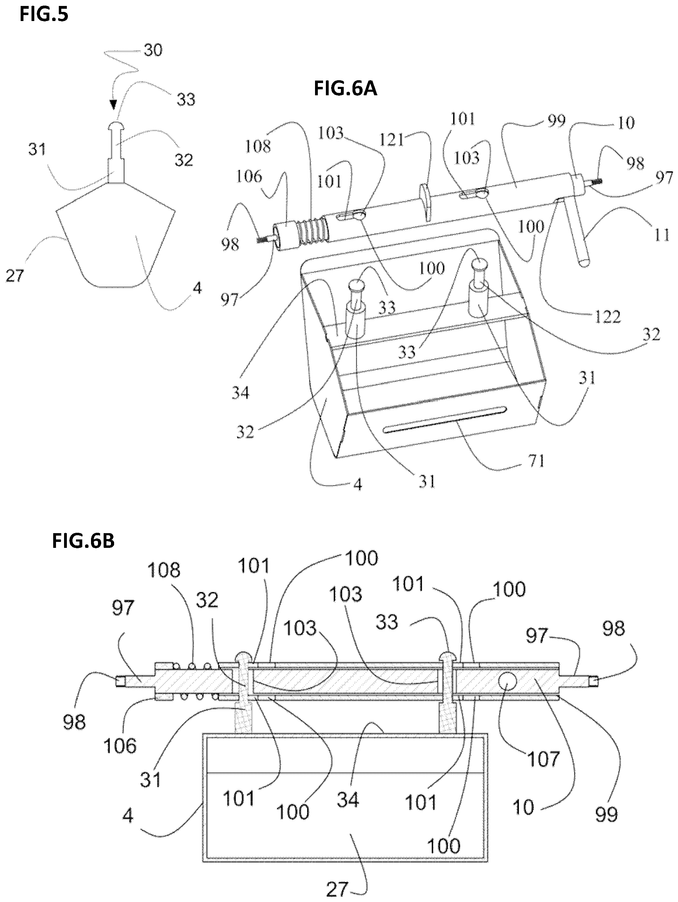

As presented in fig. 5 and fig. 6A and fig. 6B, the liquid transport container **4** is equipped with a handle **34**, on which two pins **30** are mounted, each of them consisting of pin base **31** fixed on handle **34**, pin head **33** for fixing on the swivelling support bar **10**, and the pin neck **32** which is the narrower section connecting the pin's base **31** with the pin's head **33**. By means of the two pins **30**, the container 4 is assembled on the support bar 1**0,** swivelling attached/assembled and traveling/moving down together with the roller chains **13, 14** towards reservoir **5**. Before entering the reservoir **5**, a tilt bar **11**, having a cylindrical form, fixed on the swivelling support bar **10** of the container **4**, intersects with the slider **26** of the tilt bar **11** (in position P2 from fig. 7) inclining the container **4** for the purpose of being filled with liquid. The slider **26** is fixed with screws, welded or glued, on the interior part of the back panel **105** of the liquid recirculation module and positioned in front of/next to pair of sprockets **1-2**, from axis **3**, above reservoir **5**, located in the inferior part of the liquid recirculation module, as presented in fig. 1A, fig. 1B and fig. 2.
To control the amount of liquid that can be maximum collected in the liquid container **4** the plate of the container that is opposite to the slip plate **27** is, preferably, foreseen with a wide slit **71**.

With regard to fig. 7, the tilt bar **11** in form of a rod is mounted/fixed on the swivelling support bar **10** of the container **4**; while moving together with the roller chains **13,14,** shall incline the container **4** towards the liquid from reservoir **5** until an exterior side **27** of the container **4** (referred to also as slip plate, which is the exterior side of the container firstly getting into contact with the liquid from recipient), is at least parallel to a level line W-W' of the liquid from reservoir **5**, preferably slightly inclined towards the liquid from reservoir **5**, as presented in fig. 7, before the container **4** gets into liquid (see fig. 7, position P3), this allowing the smooth entering of container **4** into the reservoir **5**.

Once the tilt bar **11** is no longer into contact with the tilt bar slider **26** while moving together with the roller chains **13, 14**, the container **4** continues to move through the liquid from reservoir **5**, (the slip plate **27** of the container preferably sliding on the bottom of reservoir **5**); the "sliding" angle φ (the inclination angle of container's axis towards the bottom of the reservoir during its contact with the bottom of reservoir), gradually increases up to 90°, then the container **4** filled with liquid, remains suspended on the roller chains **13**, **14**, as presented in position P4 and P5 of fig. 7.
With regard to fig. 8, in another embodiment, the inclination of the container **4** for liquid transportation and liquid filling may be also, possible by means of an tilt bolt **11'**, firmly fixed/mounted on one of the lateral sides (bases of the prism) of container **4**, perpendicular to it and having its length smaller than the distance between the plane of the lateral side on which it is fixed and the plane of the roller chain closest to it. Similarly as above, before the container **4** enters the reservoir **5**, the inclination bolt **11'** shall slide on a bolt slider **26**', mounted as presented above and shall incline the container 4 passing through points P'1, P'2, P'1, P'3, P'4 and P'5 (corresponding to the ones from fig.7 above described), as presented in fig. 8; also, the container **4** preferably slides on the interior side of the bottom of the liquid reservoir **5**, while the slip angle φ gradually increases until container **4** starts hanging on the roller chains **13,14,** as presented in position P'4 and P'5.

Returning to fig. 1A and fig. B, in an execution variant, the liquid reservoir **5** is mounted inside a drawer **68** without bottom plate, located in the bottom part of the liquid recirculation module and underneath the drawer, there is a heated plate **67** with electronic command, known in itself. It is fixed on a set of arches pushing the plate on the bottom plate of the liquid reservoir **5**, thus providing the best thermal contact and heating the liquid, if desired by the operator. For an easy handling, the drawer **68** of reservoir **5** is mounted on a sliding bar **65** and on two lateral supporting elements **66**, being equipped with a handle **69** made of a thermal insulating material.

### Pouring the liquid into removable liquid recipient:

In the upper part of liquid recirculation module, there is a removable liquid recipient **6** in the form of a parallelepipedal vessel, opened in the upper part, having a narrowed base wall (bottom). The removable container **6** is located on a supporting base **50**, having the vertical walls parallel with the panels of the recirculation module, having one of the walls - the front wall, near the modified vertical grill. Inside the removable container **6,** transported liquid is completely poured into container **4**, as presented in fig. 9, fig. 1A, fig. 1B and fig. 2.

With regard to fig. 9, when the container **4** for liquid transportation comes into contact with a vertical back wall 6b (further referred to as back plate 6b) of the removable liquid recipient **6**, then the slip plate **27** of container **4**, while moving together with the roller chains **13, 14**, inclines and slides over back plate 6b of the removable liquid recipient **6** and it starts the liquid transfer from container **4** towards removable liquid recipient **6**. For this, the back plate 6b of the removable container **6** has, preferably, a height of 40-50% relative to the height of all other walls of the removable liquid recipient **6** (this isn't necessarily the case, height could also be equal). Also, the contact between the slip plate **27** of the transport container **4** and the back plate 6b of recipient **6** takes place at a point along the launching line - i.e. a portion of the roller chain **13,14** contained between two points **Z1, Z2,** corresponding to tangency points of the roller chain **14** with sprockets **56** and **55** respectively, (of the chain **13** with sprockets **16** and **15** respectively). For making sure that the liquid transportation container **4** is completely drained into the removable liquid recipient **6** while moving along the launching line between points **Z1, Z2**, there must be ensured that the surface of the slip plate **27** is at least parallel with the surface of the level plan, before the swivelling support bar **10** reaches the final point **Z2** of the launching line **Z1 Z2**.

In an execution example, the slip plate **27** of container 4 for liquid transportation is extended by means of a spout **117** (as presented in fig. 6A, 1A and 1B) for facilitating the liquid transfer into removable container 6**.**

### Transfer of the liquid from the removable liquid recipient to liquid collector

With regard to fig. 10-12, the distributor **7** is also an elongated vessel having a total length **L1** smaller or equal the length of the grill's spikes, being equipped with a base chamber **40**, having in the upper part a base plate **39**, and an upper chamber **41**. The two chambers directly communicate between them, the width **k** of the upper chamber **41** is substantially bigger that the width **n** of the base chamber **40** which is, preferably, not much bigger than the diameter of the draining orifices **h1**, **h2** ... **hn** present in the base plate **39** of the distributor **7**, but big enough to allow a proper cleaning of the base chamber **40**.
For example, the width **n** of the base chamber **40**, is between 0,8 - 1,5 cm and the width k of the upper chamber **41** is at least 3 times bigger than the width n.
The distributor **7** is equipped with a hooked plate **42**, used for hanging it by a support plate **36** of the modified grill existing in the upper part (as presented in fig. 11 and 13).
The liquid flows from the removable liquid recipient **6** of the liquid recirculation module, in the absence of distributor **7** and/or removable gutter **8**, through nozzle **35** or draining orifices of the removable liquid recipient 6; it shall fall on an intermediary gutter **25** existing in the recirculation module, in reservoir **5** of this module.

The removable liquid recipient **6**, located in the upper part of the liquid recirculation module, is equipped at its base with a draining area **70** (see also fig. 1A and fig. 1B) with several orifices (in form of a sieve) or a nozzle **35**, used for draining the liquid into removable gutter **8** falling into distributor **7**. One end of gutter **8** rests, preferably, on distributor **7**, equipped with an ear **96** preventing lateral sliding, the other end is hung by means of a fastening hook **59**, to a supporting element **52** foreseen with slot **52a**, positioned on the base of a supporting element **50** of the removable liquid recipient **6**, of the liquid recirculation module, (as presented in Fig. 2 and fig.9).

The removable liquid recipient **6,** (as indicated also in fig. 1A and fig.2) is positioned above distributor **7** and implicitly the area of the base plate **39** of distributor **7**, (see also Fig. 11), and preferably is parallel with a level plan, see Fig.7, while the removable gutter **8**, when positioned on the distributor **7** and coupled by means of the supporting element **52** of the base of supporting element **50** of the liquid recirculation module, forms an angle **α** which may vary between 0 and 90 degrees, measured from a level line W-W), but it is situated, preferably, between 5 and 15 degrees, so that it is made sure that the liquid flows rapidly and smoothly (without turbulences) from removable liquid recipient **6** via removable gutter 8 of the rotisserie unit to distributor **7** of adapted grill.

The liquid flowing in distributor **7** firstly fills the volume of the base chamber corresponding to the area of the base chamber **40** Fig.11 multiplied by total length **L1**, see Figures **7** and **10****,** of distributor 7 and then the volume of upper chamber **41** corresponding to the area of upper chamber **41** multiplied by total length **L1** of distributor **7**. The width k of the upper chamber, see Fig.11, is substantially larger as the width n of the base chamber which, preferably, is not much larger that the diameter of the draining orifices **h1, h2** ... **hn** from the base plate **39** of the distributor **7**, but large enough to allow a proper cleaning of the base chamber.

### The pouring of the liquid from distributor over the rotisserie contents and back to liquid recirculation module

The liquid is transferred through removable gutter 8 of the rotisserie unit towards the distributor **7** of the adapted vertical grill, passes through draining orifices **h1, h2** ... **hn** from the base plate **39** of distributor **7,** see figures 7 and 10, which, preferably, are uniformly aligned and arranged on the length **L2** between first and last draining orifice **h1, h2** ... **hn** of distributor **7,** is poured on the rotisserie contents, such as meat and vegetables, of the adapted grill and falls over the rotisserie contents from the top to the lower row and finally from the lower row to liquid collector **9,** (see fig. 1B and 2), mounted at the base of the adapted rotisserie unit (vertical grill) and returns by means of the draining orifice **12** of the recipient and intermediary gutter **25** of the liquid recirculation module to reservoir **5**.
This "mixing" and "recirculation" of juices during the rotisserie process is the one conferring a unique taste of the end product.

With regard to fig. 11 and 12, the distributor **7** is positioned above the upper spike of the adapted grill (as presented also in fig. 2 and fig.10), so that the distance d, between the base plate **39** of distributor **7** and centre of the upper spike of grill **43** is at least 2 cm bigger than radius **R** of the rotisserie circular area **A** of this spike; this radius **R** is smaller or at least equal half the distance **b** between two successive spikes. Each spike **43** is provided at one end with a drive support roller **94** (which is mounted on a roller holder **79** with which the vertical rotisserie machine is provided, as shown in Figure 1B) and one thermal insulating handle **91** and the other end of the spike **43** is coupled to one of the driving ends **95** of the rotisserie unit, provided on the vertical grill, (as presented also in fig. 1B, fig.2).

With regard to the location of the distributor **7** on the width/depth of the grill, the support plate **36** (shown in fig.11) used for fixing/hanging the distributor **7**, is positioned inside the heating chamber, so that the bottom plate **39** of the distributer **7** is, preferably, located above the second **II** and third III trigonometric quadrant of rotisserie circular area **A**, i.e. on the other side of the grill area in which the heaters **44** (gas or electric) and radiators **45**, with which the vertical rotisserie machine is provided. In this way, the liquid falling through the draining holes **h1, h2** ... **hn** of the distributor **7**, respectively the plane in which the flow lines **f1, f2,** ..., **fn** of the liquid are located, is displaced by a distance **e** from the plane of the centre of spikes **43** of the grill, approximately 2 up to 3 cm, for avoiding that the liquid directly falling from distributor **7** on the rotisserie contents is deviated towards the heaters **44** of the adapted grill. Also, in the absence of the rotisserie contents, the liquid does not fall on the grill's spikes, but directly into liquid collector **9** or storage box **46** of the adapted grill, in order to avoid spattering.

The distance **d'** between two successive orifices of distributor **7**, for example between **h2** and **h3**, (as presented in Fig.10), is, preferably, between 5 and 10 cm, while the length **L2** between the first orifice **h1** and the last orifice **hn** of distributor **7**, is smaller than the length **L1** of distributor 7, approximately covering 80 up to 90% from the usable length of the grill's spike **43**.
The diameter of the draining orifices **h1, h2** ... **hn** of the distributor **7** is, preferably, between 1.5 and 3 mm, to ensure that the plant powder contained in the liquid does not block the drain holes **h1, h2** ... **hn** of the distributor **7**, passing through them.

The height of the base chamber **40** of the distributor **7**, see Fig.12, is preferably higher than 2 cm and the total liquid volume which may be collected by transport container **4** of the liquid recirculation module must not exceed, for safety reasons, the total volume which may be collected in the distributor **7**. For a good and uniform liquid discharge on rotisserie products, such as meat and vegetables, the nozzle **35** diameter or the total drainage area of the draining orifices of the removable liquid container **6** of the liquid recirculation module must be established so that the required filling time, marked as "t1", needed for the removable liquid recipient **6** to fill the volume of the base chamber of distributor **7** must be more rapid than the discharge time, marked as "t2", that the distributor having only its base chamber completely filled, may discharge using the draining orifices **h1, h2** ... **hn** of the basis plate **39**.

The liquid collector **9** of the liquid recirculation module, which may be removable or not, if properly mounted in the modified grill, is positioned such that an elongate (pipe-shaped) outlet **12** of the liquid collector **9**, is in the prolongation of /( aligned in parallel with) base plate **90** of the liquid collector, being slightly inclined towards a level plane beneath liquid collector **9**, to ensure that the liquid in the liquid collecting recipient **9** flows through the intermediary gutter **25** of the liquid recirculation module into the reservoir **5** from the liquid recirculation module.

### Information on storage box of rotisserie unit according to the invention

Also, with regard to fig. 1B and fig. 2, the bottom part of the modified/improved grill unit according to the invention, located beneath the glass doors **75**, is equipped with a product storage box **46**, which is positioned on a slidable product storage box support **47** on the support base **84** of the grill unit, to allow easy access to the contents of the product storage box without the need to open the glass doors **75** of the rotisserie unit, positioned just above the product storage box **46**.

The slidable product storage box support **47** rest on two front wheels **53** on the floor and on two other small guiding wheels, which are not here presented, mounted beneath the base plate **85** of the slidable product storage box support **47** and positioned in two parallel aligned channels, which are not here presented, in the support base **84** of the adapted grill unit, serving as guiding track for the slidable product storage box support **47**, allowing it to move easily forth and back, like a drawer on wheels.

### Information on the heat chamber of the rotisserie unit according to the invention

With regard to fig. 1B and Fig.2 and fig.13, the rotisserie unit, adapted according to the invention, is also equipped with a heat chamber (having the role of an oven), in its upper part, right beneath the upper plate **86** of the rotisserie unit (frame), above distributor **7**, which, in its turn, is located above the first spike **43** of the grill. The heat chamber, illustrated in fig.13, having a parallelepipedal form, being located in the upper part of the modified vertical grill, consisting in a U formed panel **62**, preferably, made of steel, having a thickness of minimum 1.5 mm for storing thermal energy, and may have on the front of the panel **62'**, two up to five rectangular openings/cuttings **88**, for hosting some boxes **61** of the heat chamber (having the role of cooking plate), each of them equipped with a handle **87** for a better handling, when "put" or "removed" from the heat chamber. Whenever put in the heat chamber, each box **61** is guided and positioned by a guide **83** having the form of a base free rectangular frame and three support bars **63** of the heat chamber, parallel aligned, made of metal, preferably steel, and supporting the weight of the boxes **61** of the heat chamber. Also, in the heat chamber, parallel to the support bars **63**, and at their level, a support plate **36** is incorporated, provided with a slot or slots for fixing the distributor **7** with the hook plate **42**. Also, in the heat chamber, parallel to the support bars **63**, and at their level, a support plate **36** is incorporated, provided with a slot or slots for fixing the distributor **7** with the hooked plate **42**.

The glass doors **75** of the grill, are equipped with heat resistant plastic handles **76** and mounted on the adapted grill with the help of a door hinge **80**. The bottom part of the door **75** is equipped with a removable metallic gutter **74** for preventing that the liquid which is thrown onto the glass doors during liquid pouring onto the rotisserie contents, such as meat and vegetables, drips on the floor when the glass doors **75** are opened / closed (see fig. 1B and Fig. 2).

### Information on support bar and spatula bar

With regard to fig. 6A and fig. 6B, the swivelling support bar **10** of the container **4** for liquid transportation, from the liquid recirculation module, ends with cylindrical portions/pin **97** having a diameter corresponding to the interior of the roller chain's roller links. The end of these cylindrical portions/pins is threaded **98**. In this way, the swivelling support bar **10** is mounted on roller chains 13, 14, each cylindrical portion/pin **97** being located within a cavity of a roller link of the roller chain **13, 14**. The swivelling support bar **10** is finally fixed with nuts, screwed on threads **98**, located at the ends of pins **97**, so that the support bar 10 may swivel around the longitudinal axis.

The swivelling support bar **10** is equipped with two passing/guiding holes **103** being at least 1 mm bigger than the diameters of the pin head **33** of pin **30** from handle **34** of container **4** and a cylindrical orifice **107** with a thread for screwing the inclination bar **11**. The threaded cylindrical hole **107** is located towards one of the ends, in the area between the plane of the side wall of container **4** and cylindrical portion/pin **97** of the bar **10**, and the axis of the threaded cylindrical hole being perpendicular (as shown in fig. 6A and fig. 6B) or inclined at an angle between 90 and 120 degrees clockwise direction, (depending on shape of slider 26, as shown in fig. 2, fig. 1A and 1B) relative to the longitudinal axes of the passing/guiding holes **103** (as shown in fig. 2, fig. 1A and 1B).

At the opposite end of the swivelling support bar **10**, before the other cylindrical portion/pin **97** of the bar, a ring **106** is fastened, for example, by screwing or welding. On the swivelling support bar **10** slides a shell/cover **99**, having the form of the bar. In the example of execution, the support bar **10** is cylindrical and the sliding shell **99** has the form on an empty tube (cylindrical shell), sliding along the support bar **10**, and perforated with two circular passing/guiding holes **100** for the pin heads **33**, corresponding to passing/guiding holes **103** from swivelling support bar **10.** These passing/guiding holes **100** extend in the same direction as two rectangular channels **101**, having their ends rounded, corresponding to pin neck **32** of pin **30**, on the handle of the container **4.**

The diameter of passing hole **100** is slightly bigger (for example, by 1 mm) than the diameter of the pin head **33**, while channel **101** has a length of 1.5 cm and a width slightly bigger (for example 1mm) than the diameter of the pin's neck **32.** The sliding shell **99** is also equipped with a channel **122**, corresponding to inclination bar **11** conditioning/limiting the degrees of freedom of the shell **99.** Also, on the swivelling support bar **10** of container **4**, between sliding shell **99** and ring **106**, there is provided a helical arch **108** pushing the sliding shell towards inclination bar **11**. Therefore, the sliding shell **99**, locks the two pins **30** secured on the handle of container **4**. The sliding shell **99** has, preferably, a protuberance **121**, as presented in fig. 6A, allowing an easier handling for the purpose of assembling/disassembling the container **4** on/from swivelling support bar **10**. The swivelling support bar **10** is mounted on roller chains **13, 14**, so that it is horizontal.
The swivelling support bar **24** of the liquid homogenizer **29** is mounted on roller chains **13, 14** similarly to swivelling support bar **10**.

All the components of the invention are made of stainless steel or other adequate materials for the functional role known by specialized persons and admitted by hygiene-sanitary norms.

## Claims

1. Vertical rotisserie apparatus with liquid pouring for basting having a supporting base (84) mounted on four wheels (54), being equipped with several horizontal spikes (43) or baskets, vertically shifted, for fixing the food, each spike (43) having its peak coupled to a driving head (95) of rotisserie, closed with two glass doors (75), said rotisserie apparatus being equipped with:
a liquid distributor (7), consisting in an extended recipient having at the bottom part some draining orifices (h1, h2, ..., hn) of the liquid, located above first spike and distributing the liquid on the entire length of the spikes;
a liquid collecting recipient (9), located underneath the last spike, where the liquid flows,
a chain transport mechanism lifting the liquid from one reservoir (5), initially filled and afterwards filled with the liquid drained from collecting recipient (9), by means of a draining orifice on the exterior bottom part of the recipient (9) to a recipient equipped with an orifice used for draining the liquid back to distributor (7) **characterized by** the fact that
the chain transport mechanism is a part of a liquid recirculation module having a parallelepipedal form, attached to the left or to the right sight of an adapted vertical rotisserie unit, wherein a container (4) for liquid transportation and a homogenizer (29) for homogenizing the liquid within reservoir (5), are mounted on the chain transport mechanism, the homogenizer (29) preceding the container (4), in the direction of movement,
said chain transport mechanism lifting the liquid
from the reservoir (5) being mounted inside a drawer (68), on a heated plate (67), said drawer being located at the bottom part of the liquid recirculation module, the reservoir (5) being initially filled, and afterwards being filled the with the liquid being drained from collecting recipient (9), by means of an elongated cylindrical draining orifice (12) or by means of a draining orifice and sliding gutter (12') on the exterior bottom part of the recipient and an intermediary gutter (25),
to a removable recipient (6) located at the upper part of the liquid recirculation module, said removable recipient (6) being equipped with an orifice used for draining the liquid through a removable chamfer (8), back to distributor (7),
the liquid recirculation module being mounted on four wheels (58) and coupled by means of some fastening clamps (28) to adapted vertical rotisserie unit forming the vertical rotisserie apparatus as a whole.

2. Apparatus as in claim 1 wherein the liquid vertical transport mechanism contains two symmetrical roller chains (13, 14), assembled in two plans parallel to back panel (105) and the front plan of the module, being driven and/or guided on pairs of sprockets (1-2, 15-55, 16-56 and 17-57), each pair of sprockets being assembled on an axis, the four axes being parallel between them and perpendicular on the back panel (105) of the module, the lower pair of sprockets (1-2) is mounted/fixed on an axis (3) cylindrically /joined, perpendicular on the back panel (105) and on the frontal panel of the liquid recirculation module, said axis (3) being driven by an engine and the other pairs of sprockets (15-55, 16-56 and 17-57), having a guiding role, are articulated on one pair of colinear semi-axes, fixed on front and back panels respectively (105), on the roller chains (13, 14), being assembled each on a swivelling support bar (10, 24):
the container (4) for transportation of the liquid, opened at the upper part, the container (4) being driven and guided so that, at the inferior end of the route, before getting into reservoir (5), to be inclined by rotating its swivelling container support bar making possible to collect the liquid existing in reservoir (5), and at the upper end of the track, the pouring/spilling of the collected liquid into removable container (6); and before it in the moving direction,
the liquid homogenizer (29) which upon its passing through the liquid existing in the reservoir (5), homogenizes the liquid before its getting into container (4), upon passing the container (4) through reservoir (5).

3. Apparatus as in claim 2 wherein the liquid transportation container (4) has the form of an empty, right prism, having as base an irregular hexagon consisting in two isosceles trapezes having in common the large base, positioned as having the height parallel to container support bar (10), having rounded base edges; at the upper part, the container is provided with a handle (34) and the container (4) being opened on both sides of the handle (34), is fixed by means of two pins (30) to said support bar (10) provided with two passing orifices, perpendicular on the axis, by means of a mechanism for locking the ends (33) of the pins (30) with a cylindrical sliding shell (99), on the same support bar (10) being mounted also an inclination bar (11), so that the container moves towards the liquid reservoir (5) of the liquid recirculation module, then the inclination bar (11) coming into contact with a slider (26), which is fixed on a panel of the liquid recirculation module, positioned in front of pair of lower sprockets (1-2) above the liquid reservoir (5), shall incline the liquid transportation container (4) towards the liquid existing in the reservoir (5) until the slip plate (27) of the container (4) is at least parallel to the level line (W-W') of the liquid existing in the reservoir (5), before the above-mentioned container (4) gets into contact with the liquid, allowing the smooth entering and sinking of the container (4) until the slip plate (27) of the container (4) reaches the bottom of the reservoir (5) and for controlling the amount of liquid that can be maximum collected in the liquid container (4) the plate of the container (4) that is opposite to the slip plate (27) is foreseen with a wide slit (71).

4. Apparatus as in claim 3 wherein in another embodiment, the liquid transportation container (4) is equipped with an inclination bar (11'), in form of a cylindrical rod fixed on one of the lateral sides of the container (4), a bar which slides on another slider (26') mounted under the same conditions as the first slider (26), but inclined towards the liquid reservoir (5), shall incline the container (4) towards the liquid existing in reservoir (5),

5. Apparatus as in claim 2 wherein the swivelling container support bar (10) ends with two cylindrical portions (97) having a diameter corresponding to the interior of the roller chain roller links, the end of the portions are threaded (98), and is provided with two passing/guiding holes (103) corresponding to the diameters of the ends (33) of pin (30) on the handle (34) of the container (4), and a cylindrical threaded orifice (107) for screwing the inclination bar (11), the threaded hole (107) is located towards one of the ends of the support bar, in the area between the plane of side wall of the container (4) and cylindrical portion (97) of the bar, the axis of the threaded cylindrical hole being perpendicular or inclined at an angle between 90 and 120 degrees relative to the longitudinal axes of the passing/guiding holes (103) of said support bar (10), and at the opposite end of the said support bar (10), before the other cylindrical portion (97) of the this bar, being fixed a ring (106), on the said support bar (10) sliding a the cylindrical shell (99), between the cylindrical shell (99) and ring (106) being an helicoidal arch (108), pushing the cylindrical shell (99) towards the inclination bar (11).

6. Apparatus as in claim 5 wherein the cylindrical shell (99) has two circular passing/guiding holes (100) for the pin heads (33), prolonged in the same direction with two channels (101) corresponding to a neck (32) of the pin (30), on the handle (34) of the container (4); the sliding cylindrical shell (99) is also equipped with a rectangular channel (122), rounded at one end, corresponding to inclination bar (11), on the container support bar (10), between the sliding cylindrical shell (99) and ring (106) existing an helicoidal arch (108) pushing the sliding shell (99) towards inclination bar (11) for the purpose of blocking/locking the ends of the pin (30) on the cylindrical shell (99).

7. Apparatus as in claim 2 wherein the liquid homogenizer (29) is a comb shaped spatula, containing a spatula arm in form of two parallel plates (18, 18'), having the bottom end cut under an angle between 30 - 50°, on which a comb is fixed (20), and the other end is articulated by means of swivelling axis (22), in the bottom part of the median area of two supporting elements (19, 19') of the spatula arm, in form of two plates with rounded ends, the upper ends of the supporting elements (19, 19') are articulated to homogenizer support bar (24) of the liquid homogenizer (29), on the supporting elements of the spatula arm (19, 19') being mounted a counterweight (21), ensuring the fact that the longitudinal axis (A- A') of the supporting element of spatula arm (19, 19'), remains perpendicular on a level line (W-W) of the liquid existing in the reservoir (5), and a rotation limiter (23) of spatula arm around the swivelling axis (22), upon return, to an angle (β) between the longitudinal axis (A A') of the supporting element of spatula arm (19, 19') and spatula arm (18,18') smaller or equal to 160 degrees.

8. Apparatus as in claim 1 wherein the mechanism for transportation of the liquid acts at adjustable time intervals or upon manual command of the operator, making a full stroke and then it stops.

9. Apparatus as in claim 1 wherein the distributor (7) has a total length (L1) smaller or equal to the length of the spikes of the adapted vertical rotisserie unit, being equipped with a base chamber (40), having in the bottom part a base plate (39) and an upper chamber (41), the two chambers directly communicating between them, the width (k) of the upper room (41) being substantially bigger than the width (n) of the basic chamber (40) which is, preferably, not bigger then the diameter of the draining orifices (h1, h2,..hn) made in a base plate (39) located in the bottom part of the distributor (7).

10. Apparatus as in claim 1 wherein the bottom part of the adapted vertical rotisserie unit is equipped with a storage box (46) for products, which is positioned on a supporting element (47) sliding on the support base (84) of the adapted vertical rotisserie unit; the upper edge of the cover of the storage box (46) is located beneath the glass doors (75), the sliding supporting element (47) rests on two front wheels (53), on the floor and on other two small guiding wheels, mounted underneath the base plate (85) of the supporting element of the storage box (47), and positioned in two parallel aligned grooves/channels existing in the support base (84), serving as guiding rails for the supporting element (47) of the storage box (46).

11. Apparatus as in claim 1 wherein the adapted vertical rotisserie unit is equipped also with a heat chamber in its upper part, right beneath the upper plate (86) of the rotisserie machine frame, right above distributor (7), containing a U-shaped plate (62) with a frontal panel, having some rectangular cuttings (88), for hosting some boxes (61) of the heat chamber, each box (61) being guided and positioned by a guiding element (83) having the form of a base free rectangular frame and three support bars (63), parallel aligned, made of metal, preferable steel, for supporting the weight of the boxes of the heating chamber.

12. Apparatus as in claim 11 wherein the heat chamber, parallel to support bars (63), and at their levels, there is inserted a support plate (36), equipped with a slot or a few slots for fixing the distributor (7) with the help of a hooked plate (42).

13. Apparatus as in claim 12 wherein the support plate (36) on which the distributor is fixed (7) is positioned, so that the base plate (39) of the distributor (7) is located above the second and third trigonometric quadrant of the rotisserie circular area (A).

14. Apparatus as in claim 1 wherein each glass door (75) of the adapted vertical rotisserie unit is equipped on the interior side, at the bottom part, with a removable metallic gutter (74) to prevent the liquid that is thrown onto glass doors during liquid flow on the rotisserie contents, drips to the floor.

15. Apparatus as in claim 1 wherein the drawer (68) inside of which is mounted the reservoir (5), has not the bottom plate so that beneath the drawer there is a heated plate (67) with electronic command, fixed on a set of springs pushing the plate on the external surface of the bottom plate of the liquid reservoir (5), when the drawer (68) is closed.

## Patentansprüche

1. Vertikales Rotisseriegerät mit einer Vorrichtung zum Beträufeln der Nahrungsstücke mit mürbemachender Flüssigkeit, das mit zwei Glastüren (75) verschlossen ist, ein auf vier Rädern (54) montiertes Grundgestell (84) hat, mit vielzähligen waagerechten, senkrecht versetzten Spießen (43) oder Körben zur Befestigung der Nahrungsstücke ausgerüstet ist, jeder der Spieße (43) ist mit der Spitze an jeweils einem Antriebskopf (95) des Drehspieß-Grills angeschlossen und besagtes Rotisseriegerät mit ausgestattet ist
einem Flüssigkeitsverteiler (7), bestehend aus einem langgezogenen, an der Unterseite einige Abflussöffnungen (h1, h2, ..., hn) aufweisenden, oberhalb des ersten Spießes angeordneten Flüssigkeitsbehälter, der die Flüssigkeit über die gesamte Länge der Spieße verteilt;
einem unter dem letzten Spieß, wo die Flüssigkeit hinfließt, angeordneten Sammelbehälter (9) für die Flüssigkeit,
einem Kettentransportmechanismus, der die Flüssigkeit aus einem eingangs befüllten und anschließend mit der vom Sammelbehälter (9) abfließenden Flüssigkeit nachgefüllten Reservoir/ Flüssigkeitsreservoir (5) über eine Abflussöffnung an der äußeren Unterseite des Sammelbehälters (9) zu einem mit einer zum Rückfluß der Flüssigkeit zum Verteiler (7) dienenden Öffnung versehenen Behälter anhebt, **dadurch gekennzeichnet, dass**
der Kettentransportmechanismus Teil einer parallelepipedalförmigen Flüssigkeitsrückführeinheit ist, die links- oder rechtsseitig an einer angepassten senkrechten Drehspießeinheit angeschlossen ist, innerhalb derer ein Transportbehälter (4) zum Transport der Flüssigkeit und ein Homogenisator (29} zum Homogenisieren der im Reservoir (5) befindlichen Flüssigkeit auf dem Kettentransportmechanismus angeordnet sind, der Homogenisator (29) dem Transportbehälter (4) in Bewegungsrichtung voran,
besagter Kettentransportmechanismus die Flüssigkeit
aus dem innerhalb eines Schiebers (68), auf einer Heizplatte (67) eingebauten Reservoir (5), wobei besagter Schieber (68) im unteren Teil der Flüssigkeitsrückführeinheit angeordnet ist, der Reservoir (5) eingangs befüllt und anschließend mit der Flüssigkeit, die aus dem Sammelbehälter (9) über eine zylindrische, langgezogene Abflussöffnung (12) oder über eine Abflussöffnung und die geführte Rinne (12') an der äußeren Unterseite des Behälters und eine Zwischenrinne (25) abfließt, nachgefüllt wird,
zu einem im oberen Teil der Flüssigkeitsrückführeinheit angeordneten abnehmbaren Behälter (6), wobei der besagte abnehmbare Behälter (6) mit einer Öffnung zum Abfließen der Flüssigkeit über eine abnehmbare Rinne (8), zurück zum Verteiler (7) versehen ist,
anhebt,
die Flüssigkeitsrückführeinheit auf vier Rädern (58) steht und über Befestigungsklammern (28) an die angepasste senkrechte/vertikalen Drehspießeinheit angeschlossen ist, und damit das senkrechte Rotisseriegerät als Ganzes bildet.

2. Gerät nach Anspruch 1, bei dem der senkrechte Flüssigkeitstransportmechanismus zwei symmetrische in zwei jeweils zu der Rückwand (105) und der Vorderwand der Flüssigkeitsrückführeinheit parallelen Ebenen zusammengebaute Rollenketten (13, 14) umfasst, die über auf jeweils einer Achse zusammengestellte Zahnradpaare (1-2, 15-55, 16-56 und 17-57) angetrieben und/oder geleitet sind, wobei die vier Achsen untereinander parallel und senkrecht zur Rückwand (105) der Einheit sind, das unterste Zahnradpaar (1-2) auf einer zylindrisch angelenkten, auf die Rückwand (105) und die Vorderwand der Flüssigkeitsrückführeinheit senkrechten Achse (3) angeordnet/befestigt ist, besagte Achse (3) von einem Motor angetrieben wird, und die anderen Zahnradpaare (15-55, 16-56 und 17-57), die eine führende (leitende) Rolle haben, an jeweils ein kollineares, an der Vorder- (105) bzw. Rückwand befestigtes Halbachsenpaar angelenkt sind, wobei auf den Rollenketten (13, 14), auf jeweils einem schwenkbaren Haltestab/ Stützstange (10, 24) eingebaut sind:
der an der Oberseite offene Flüssigkeitstransportbehälter (4), der so angetrieben und geleitet wird, dass er am unteren Hubende, vor dem Eintritt in den Reservoir (5), durch die Drehung seines schwenkbaren Transportbehälterstützstange (10) geneigt wird, wodurch er das Schöpfen von im Reservoir (5) vorhandener Flüssigkeit, und am oberen Hubende das Gießen/Ausfließen der geschöpften Flüssigkeit în den abnehmbaren Behälter (6) ermöglicht; und in Bewegungsrichtung davor,
der Flüssigkeitshomogenisator (29), der beim Durchgang durch die im Reservoir (5) vorhandene Flüssigkeit, die Flüssigkeit homogenisiert, bevor diese beim Passieren des Transportbehälters (4) durch den Reservoir (5) in den Transportbehälter gelangt,

3. Gerät nach Anspruch 2, bei dem der Flüssigkeitstransportbehälter (4) die Form eines hohlen Quaders mit einem aus zwei gleichschenkligen Trapezen mit gemeinsamer großer Grundlinie gebildeten unregelmäßigen Sechseck als Grundfläche aufweist, mit zum Transportbehälterstützstange (10) parallel gerichteter Quaderhöhe und abgerundeten Grundlagenkanten; der Transportbehälter (4) an seiner Oberseite mit einem Griff (34) versehen ist, und der beiderseits des Griffs (34) offene Transportbehälter (4) über zwei Stifte (30) an dem mit zwei zur Achse senkrechten Durchgangsöffnungen versehenen Transportbehälterstützstange (10) durch einen Blockierungsmechanismus der Enden (33) der Stifte (30) in einer zylindrischen Gleithülse (99) befestigt ist, auf demselben Transportbehälterstützstange (10) ebenfalls ein Neigungsstift (11) angeordnet ist, damit der Transportbehälter sich zum Flüssigkeitsreservoir (5) der Flüssigkeitsrückführeinheit bewegt, dabei der Neigungsstift (11), durch Berührung eines auf einer Wand der Flüssigkeitsrückführeinheit befestigten, vor dem unteren Zahnradpaar (1-2), oberhalb des Flüssigkeitsreservoir (5) angeordneten Gleitstücks (26), den Flüssigkeitstransportbehälter (4) in Richtung der im Sammelbehälter (5) vorhandenen Flüssigkeit neigt, bis die Gleitplatte (27) des Transportbehälters (4) mit der Wasserstandlinie (W-W) der Flüssigkeit aus dem Sammelbehälter (5) wenigstens parallel ist, bevor besagter Transportbehälter (4) die Flüssigkeit berührt, was den Transportbehälter (4) erschütterungsfrei eindringen und untertauchen lässt, bis die Gleitplatte (27) des Transportbehälters (4) den Boden des Reservoir (5) erreicht, und, zur Steuerung der Höchstmenge an Flüssigkeit, die im Transportbehälter (4) gesammelt werden kann, die der Gleitplatte (27) gegenüberliegende Platte des Transportbehälters (4) mit einem breiten Spalt (71) versehen ist.

4. Gerät nach Anspruch 3, bei dem, in einer weiteren Ausführungsform, der Flüssigkeitstransportbehälter (4) mit einem Neigungsstift (11') in Form eines zylindrischen, an einer der Seitenwände des Transportbehälters (4) befestigten Stabes versehen ist, einem Stift, der durch Gleiten auf einem gleichartig mit dem ersten Gleitstück (26) eingebauten aber zum Flüssigkeitsreservoir (5) geneigten weiteren Gleitstück (26'), den Transportbehälter (4) in Richtung der im Reservoir (5) vorhandenen Flüssigkeit neigen wird.

5. Gerät nach Anspruch 2, bei dem der schwenkbare Transportbehälterstützstange (10) mit zwei zylindrischen Abschnitten (97) mit dem Inneren der Rollenglieder der Kettenrollen entsprechenden Durchmesser und jeweils endseitigem Gewinde (98) endet, und mit zwei Durchgangs-/Führungsbohrungen (103) entsprechend den Enddurchmessern (33) der auf dem Griff (34) des Transportbehälters (4) befindlichen Stifte (30) und einer zylindrischen Gewindebohrung (107) zur Verschraubung des Neigungsstifts (11) versehen ist, die Gewindebohrung (107) sich im Bereich eines der Enden des Transportbehälterstützstange (10), im Abschnitt zwischen der Ebene der Seitenwand des Transportbehälters (4) und dem zylindrischen Abschnitt (97) der Stützstange befindet, die Achse der zylindrischen Gewindebohrung zu den Längsachsen der Führungs-/Durchgangsbohrungen (103) in die besagte Stützstange (10) senkrecht oder dazu um einen Winkel zwischen 90 und 120 Grad geneigt ist, und am entgegengesetzten Ende der besagte Stützstange (10), vor dem weiteren zylindrischen Bereich (97) dieser Stützstange, ein Ring (106) befestigt ist, wobei auf der besagte Stützstange (10) eine zylindrische Hülse (99) gleitet, und zwischen der zylindrischen Hülse (99) und dem Ring (106) eine Spiralfeder (108) vorgesehen ist, die die zylindrische Hülse (99) in Richtung des Neigungsstifts (11) spannt.

6. Gerät nach Anspruch 5, bei dem die zylindrische Hülse (99) mit zwei kreisförmigen Durchgangs-/Führungsbohrungen (100) für die Stiftendköpfe (33) versehen ist, die in derselben Richtung durch zwei einem Hals (32) der Stifte (30) auf dem Griff (34) des Transportbehälters (4) entsprechende, an einem Ende abgerundete Kanäle (101) verlängert sind; die Gleithülse (99) ebenfalls mit einem rechteckigen, an einem Ende abgerundeten Kanal (122) versehen ist, der dem Neigungsstift (11) entspricht, während an der Transportbehälterstützstange (10) eine Spiralfeder (108) zwischen der zylindrischen Hülse (99) und dem Ring (106) vorgesehen ist, welche die Hülse (99) zwecks Blockierung/Verrastung der Stiftenden (30) auf der zylindrischen Hülse (99) in Richtung des Neigungsstift (11) verschiebt.

7. Gerät nach Anspruch 2, bei dem der Flüssigkeitshomogenisator (29) ein kammförmiger Spatel ist, der einen Spatelarm in Form zweier paralleler Platten (18, 18') mit unter einem Winkel von 30-50° geschnittenen unteren Enden umfasst, an welchen ein Kamm (20) befestigt ist, und das andere Ende mittels der Schwenkachse (22) im unteren Teil des mittleren Bereichs zweier Halteelemente (19, 19') des Spatelarms, in Form zweier Platten mit abgerundeten Enden, angelenkt ist, die oberen Enden der Halteelemente (19,19') an der Homogenisatorstützstange (24) des Flüssigkeitshomogenisators (29) angelenkt sind, auf den Halteelementen (19, 19') des Spatelarms ein Gegengewicht (21) eingebaut ist, das sicherstellt, dass die Längsachse (A-A') des Halteelements des Spatelarms (19, 19') senkrecht auf einer Wasserstandlinie (W-W) der im Reservoir (5) vorhandenen Flüssigkeit bleibt, sowie ein Drehbegrenzer (23) der Drehung des Spatelarms um die Schwenkachse (22), auf dem Rückweg, auf einen Winkel (β) zwischen der Längsachse (A-A') des Halteelements des Spatelarms (19, 19') und dem Spatelarm (18,18') kleiner oder gleich 160 Grad.

8. Gerät nach Anspruch 1, bei dem der Flüssigkeitstransportmechanismus in regelbaren Zeitabständen oder auf Grund von Handsteuerung durch den Betreiber tätig wird, indem er einen vollen Hub durchführt und dann hält.

9. Gerät nach Anspruch 1, bei dem der Verteiler (7) eine Gesamtlänge (L1) kleiner oder gleich der Länge der angepassten vertikalen Drehspießeinheit besitzt, mit einer Grundkammer (40), die im unteren Teil eine Grundplatte (39) hat, und einer oberen Kammer (41), wobei die beiden Kammern direkt miteinander verbunden sind, die Breite (k) der oberen Kammer (41) erheblich größer ist als die Breite (n) der Grundkammer (40), welche vorzugsweise nicht größer ist als der Durchmesser der Abflussöffnungen (h1, h2,..hn), die in einer im unteren Teil des Verteilers (7) befindlichen Grundplatte (39) vorgenommen sind.

10. Gerät nach Anspruch 1, bei dem der untere Teil der angepassten vertikalen Drehspießeinheit mit einem Lagerkasten (46) für Produkte ausgerüstet ist, der an einem auf einem Grundgestell (84) der angepassten vertikalen Drehspießeinheit gleitenden Halteelement (47) angeordnet ist; der obere Rand des Deckels des Lagerkastens (46) unter den Glastüren (75) angeordnet ist, das gleitende Halteelement (47) auf zwei Vorderrädern (53) auf dem Boden und auf zwei weiteren, kleinen unterhalb der Grundplatte (85) des Halteelements des Lagerkastens (47) eingebauten Leiträdern steht, die sich in zwei parallel verlaufenden in dem Grundgestell (84) vorhandenen, als Leitschienen für das Halteelement (47) des Lagerkastens (46) dienenden Rillen/offenen Kanälen befinden.

11. Gerät nach Anspruch 1, bei der angepassten vertikalen Drehspießeinheit in seinem oberen Teil, direkt unter der oberen Platte (86) des Rahmens des Rotisseriegerätes, unmittelbar oberhalb des Verteilers (7), auch mit einer Heizkammer ausgerüstet ist, die eine U-förmige Platte (62) mit einer Vorderwand mit rechteckigen Ausnehmungen (88) zur Aufnahme einiger Kästen (61) der Heizkammer umfasst, wobei die Kästen (61) von jeweils einem Leitelement (83) mit der Form eines grundlagenfreien rechteckigen Rahmens und drei parallel fluchtenden Haltestäben (63) aus Metall, vorzugsweise aus Stahl, zum Halten des Gewichts der Kästen der Heizkammer geleitet und positioniert sind.

12. Gerät nach Anspruch 11, bei dem in die Heizkammer, parallel zu den Haltestäben (63) und auf deren Höhe, eine Stützplatte (36) eingebaut wird, die mit einem Spalt oder einigen Spalten für die Befestigung des Verteilers (7) mit Hilfe einer hakenförmig gebogenen Platte (42) versehen ist.

13. Gerät nach Anspruch 12, bei dem die Halteplatte (36), auf der der Verteiler (7) befestigt ist, so angeordnet ist, dass sich die Grundplatte (39) des Verteilers (7) oberhalb des zweiten und dritten trigonometrischen Quadranten der kreisförmigen Oberfläche (A) des Rotisseriegerätes befindet.

14. Gerät nach Anspruch 1, bei dem die Glastüren (75) der angepassten vertikalen Drehspießeinheit auf der Innenseite, im unteren Teil mit jeweils einer entfernbaren Metallrinne (74) ausgerüstet sind, um zu verhindern, dass, während des Fließens von Flüssigkeit auf den Inhalt der Rotisserie, auf die Glastüren geworfene Flüssigkeit auf den Boden tropft.

15. Gerät nach Anspruch 1, bei dem der Schieber (68), in dem der Flüssigkeitsreservoir (5) eingebaut ist, keine Bodenplatte besitzt und dementsprechend unter dem Schieber eine Heizplatte (67) mit elektronischer Steuerung auf einem Satz Federn befestigt ist, der die Platte, bei geschlossenem Schieber (68), gegen die äußere Bodenfläche des Flüssigkeitsreservoir (5) presst.

## Revendications

1. Appareil de rôtissoire vertical avec versement de liquide en goutte pour badigeonner ayant une base de support (84) montée sur quatre roues (54), étant équipé de plusieurs broches horizontales (43) ou paniers, décalés verticalement, pour fixer les aliments, chaque broche (43) ayant son sommet couplé à une tête d'entraînement (95) de la rôtissoire, fermée par deux portes en verre (75), ledit appareil de rôtisserie étant équipé avec :
un distributeur de liquide (7), constitué par un récipient prolongé/ allongé présentant en partie basse des orifices de drainage (h1, h2, ..., hn) du liquide, situés au-dessus du premier broche et répartissant le liquide sur toute la longueur des broches;
un récipient collecteur de liquide (9), situé sous la dernière broche, où le liquide s'écoule,
un mécanisme de transport à chaîne soulevant le liquide d'un réservoir (5), initialement rempli et ensuite rempli avec le liquide drainé du récipient collecteur (9), au moyen d'un orifice de drainage sur à l'extérieure de la partie inférieure du récipient collecteur (9), vers un récipient équipé d'un orifice servant à drainer le liquide vers le distributeur (7) **caractérisé par le fait que**
le mécanisme de transport à chaîne fait partie d'un module de recirculation de liquide de forme parallélépipédique, fixé à gauche ou à droite d'une unité de rôtissoire verticale adaptée/ modifiée, dans lequel un conteneur (4) pour le transport de liquide et un homogénéisateur (29) pour l'homogénéisation le liquide à l'intérieur du réservoir (5), sont montés sur le mécanisme de transport de chaîne, l'homogénéisateur (29) précédant le conteneur (4), dans le sens du mouvement,
ledit mécanisme de transport à chaîne soulevant le liquide du réservoir (5) étant monté à l'intérieur d'un tiroir (68), sur une plaque chauffante (67), ledit tiroir étant situé en partie basse du module de recirculation de liquide, le réservoir (5) étant initialement rempli, puis rempli le liquide étant évacué du récipient collecteur (9), au moyen d'un orifice de drainage cylindrique allongé (12) ou au moyen d'un orifice de drainage et d'une gouttière coulissante (12') sur la partie inférieure extérieure du récipient et d'une gouttière intermédiaire (25),
à un récipient amovible (6) situé à la partie supérieure du module de recirculation de liquide, ledit récipient amovible (6) étant pourvu d'un trou/ orifice de drainage le liquide à travers un chanfrein amovible (8), en retour vers le distributeur (7),
le module de recirculation de liquide étant monté sur quatre roues (58) et couplé au moyen de certaines pinces de fixation (28) à l'unité de rôtissoire verticale adaptée formant l'ensemble de l'appareil de rôtissoire vertical.

2. Appareil selon la revendication 1 dans lequel le mécanisme de transport vertical de liquide contient deux chaînes à rouleaux symétriques (13, 14), assemblées en deux plans parallèles au panneau arrière (105) et au plan avant du module, étant entraînées et / ou guidées sur paires de pignons (1-2, 15-55, 16-56 et 17-57), chaque paire de pignons étant assemblée sur un axe, les quatre axes étant parallèles entre eux et perpendiculaires sur le panneau arrière (105) du module , la paire inférieure de pignons (1-2) est montée / fixée sur un axe (3) cylindrique / joint, perpendiculaire au panneau arrière (105) et au panneau frontal du module de recirculation de liquide, ledit axe (3) étant entraînés par un moteur et les autres paires de pignons (15-55, 16-56 et 17-57), ayant un rôle de guidage, sont articulées sur une paire de demi-axes colinéaires, fixés respectivement sur les panneaux avant et arrière (105) , sur les chaînes à rouleaux (13, 14), assemblées chacune sur une barre de support pivotante (10, 24):
le conteneur (4) pour le transport du liquide, ouvert en partie supérieure, le conteneur (4) étant entraîné et guidé de telle sorte qu'à l'extrémité inférieure du parcours, avant d'entrer dans le réservoir (5), il s'incline par rotation sa barre de support pivotante (10) de conteneur permettant de collecter le liquide existant dans le réservoir (5), et à l'extrémité supérieure de la piste, le déversement du liquide collecté dans le conteneur amovible (6); et avant dans le sens du mouvement,
l'homogénéisateur de liquide (29) qui, lors de son passage à travers le liquide existant dans le réservoir (5), homogénéise le liquide avant son entrée dans le conteneur (4), pendant/ lors du passage du conteneur (4) à travers le réservoir (5).

3. Appareil selon la revendication 2 dans lequel le conteneur (4) de transport de liquide a la forme d'un prisme droit vide, ayant comme base un hexagone irrégulier constitué de deux trapèzes isocèles ayant en commun la grande base, positionnés comme ayant la hauteur parallèle à barre de support (10) de conteneur, ayant des bords de base arrondis; en partie supérieure, le conteneur est pourvu d'une poignée (34) et le conteneur (4) étant ouvert de part et d'autre de la poignée (34), est fixé au moyen de deux goupilles (30) à ladite barre de support (10) de conteneur muni de deux orifices de passage, perpendiculaires à l'axe, au moyen d'un mécanisme de verrouillage des extrémités (33) des goupilles (30) avec une coque cylindrique (99) coulissante, sur la même barre de support (10) de conteneur étant montée également une barre d'inclinaison (11), de sorte que le récipient se déplace vers le réservoir de liquide (5) du module de recirculation de liquide, puis la barre d'inclinaison (11) venant en contact avec un curseur (26), qui est fixé sur un panneau du liquide le module de recirculation, positionné devant la paire de pignons inférieurs (1-2) au-dessus du réservoir de liquide (5), doit incliner le conteneur (4) de transport de liquide vers le liquide existant dans le réservoir (5) jusqu'à la plaque de glissement (27) du conteneur (4) est au moins parallèle à la ligne de niveau (W-W') du liquide existant dans le réservoir (5), avant que le conteneur (4) susmentionné entre en contact avec le liquide, permettant l'entrée et l'enfoncement en douceur du conteneur (4) jusqu'à ce que la plaque de glissement (27) du conteneur (4) atteigne le fond du réservoir (5) et pour contrôler la quantité de liquide qui peut être collectée au maximum dans le conteneur (4), la plaque du conteneur (4) qui est opposée à la plaque de glissement (27) est pourvue d'une large fente (71).

4. Appareil selon la revendication 3 dans lequel dans un autre mode de réalisation, le conteneur (4) de transport de liquide est équipé d'une barre d'inclinaison (11'), sous forme d'une tige cylindrique fixée sur l'un des côtés latéraux du conteneur (4), une barre qui coulisse sur un autre curseur (26') monté dans les mêmes conditions que le premier curseur (26), mais incliné vers le réservoir de liquide (5), doit incliner le conteneur (4) vers le liquide existant dans le réservoir (5).

5. Appareil selon la revendication 2, dans lequel la barre pivotante (10) de support de conteneur se termine par deux parties cylindriques (97) ayant un diamètre correspondant à l'intérieur des maillons de la chaîne à rouleaux, les extrémités des parties sont filetées (98), et est pourvu de deux trous de passage / guidage (103) correspondant aux diamètres des extrémités/ têtes (33) de goupilles (30) sur la poignée (34) du conteneur (4), et d'un orifice fileté cylindrique (107) pour visser le barre d'inclinaison (11), le trou fileté (107) est situé vers l'une des extrémités de la barre de support, dans la zone comprise entre le plan de paroi latérale du conteneur (4) et la partie cylindrique (97) de la barre, la axe du trou cylindrique fileté étant perpendiculaire ou incliné d'un angle compris entre 90 et 120 degrés par rapport aux axes longitudinaux des trous de passage / guidage (103) de ladite barre de support (10) de conteneur, et à l'extrémité opposée de ladite barre de support (10) de conteneur, avant l'autre partie cylindrique (97) de cette barre, étant fixée une bague (106), sur ladite barre de support (10) de conteneur coulissant la coque cylindrique (99), entre la coque cylindrique (99) et la bague (106) étant un arc hélicoïdal (108), poussant la coque cylindrique (99) vers la barre d'inclinaison (11).

6. Appareil selon la revendication 5 dans lequel la coque cylindrique (99) présente deux trous circulaires de passage / guidage (100) pour les têtes (33) de goupilles, prolongés dans le même sens par deux canaux (101) correspondant à un col (32) de la goupille (30), sur la poignée (34) du conteneur (4); la coque cylindrique (99) coulissante est également équipée d'un canal rectangulaire (122), arrondi à une extrémité, correspondant à la barre d'inclinaison (11), sur la barre de support de conteneur (10), entre la coque cylindrique coulissante (99) et la bague (106) existant un arc hélicoïdal (108) poussant la coque coulissante (99) vers la barre d'inclinaison (11) dans le but de bloquer / verrouiller les extrémités de la goupille (30) sur la coque cylindrique (99).

7. Appareil selon la revendication 2, dans lequel l'homogénéisateur (29) de liquide est une spatule en forme de peigne, contenant un bras de spatule sous la forme de deux plaques parallèles (18, 18'), dont l'extrémité inférieure est coupée sous un angle compris entre 30° et 50°, sur lequel est fixé un peigne (20), et l'autre extrémité est articulée au moyen d'un axe de pivotement (22), dans la partie inférieure de la zone médiane de deux éléments de support (19, 19') du bras de spatule, en forme de deux plaques aux extrémités arrondies, les extrémités supérieures des éléments de support (19, 19') sont articulées à la barre de support (24) d'homogénéisateur (29) de liquide, sur les éléments de support du bras de spatule (19,19') étant monté un contrepoids (21), assurant le fait que l'axe longitudinal (A- A') de l'élément de support du bras de spatule (19, 19'), reste perpendiculaire sur une ligne de niveau (W-W') de le liquide existant dans le réservoir (5), et un limiteur de rotation (23) du bras de spatule autour de ledit l'axe de pivotement (22), lors du retour, à un angle (β) entre l'axe longitudinal est (A - A') de l'élément de support du bras de spatule (19, 19') et du bras de spatule (18, 18') inférieur ou égal à 160 degrés.

8. Appareil selon la revendication 1, dans lequel le mécanisme de transport du liquide agit à des intervalles de temps réglables ou sur commande manuelle de l'opérateur, effectuant une course complète puis s'arrête.

9. Appareil selon la revendication 1 dans lequel le distributeur (7) a une longueur totale (L1) inférieure ou égale à la longueur des broches (43) de l'unité de rôtisserie verticale adaptée, étant équipé d'une chambre de base (40), comportant dans le fond une partie d'une plaque de base (39) et d'une chambre supérieure (41), les deux chambres communiquant directement entre elles, la largeur (k) de la chambre supérieure (41) étant sensiblement plus grande que la largeur (n) de la chambre de base (40) ) qui n'est, de préférence, pas plus grand que le diamètre des orifices de drainage (h1, h2, .. hn) réalisés dans la plaque de base (39) située dans la partie inférieure du distributeur (7).

10. Appareil selon la revendication 1, dans lequel la partie inférieure de l'unité de rôtisserie verticale adaptée est équipée d'une boîte de rangement (46) pour les produits, qui est positionnée sur un élément de support (47) coulissant sur la base de support (84) de l'unité de rôtisserie verticale adaptée; le bord supérieur du couvercle du coffre de rangement (46) est situé sous les portes vitrées (75), l'élément de support coulissant (47) repose sur deux roues avant (53), sur le plancher et sur deux autres petites roues de guidage, monté sous la plaque de base (85) de l'élément de support (47) de la boîte de rangement (46) et positionné dans deux rainures / canaux parallèles alignés existant dans la base de support (84), servant de rails de guidage pour l'élément de support (47) de la boîte de rangement (46).

11. Appareil selon la revendication 1, dans lequel l'unité de rôtissoire verticale adaptée est équipée également d'une chambre de chauffe dans sa partie supérieure, juste en dessous de la plaque supérieure (86) du bâti de la unité de rôtissoire, juste au-dessus du distributeur (7), contenant une plaque profilée (62) en forme de lettre U avec un panneau frontal, comportant quelques découpes rectangulaires (88), pour accueillir certaines boîtes (61) de la chambre de chauffe, chaque boîte (61) étant guidée et positionnée par un élément de guidage (83) ayant la forme de un châssis rectangulaire libre de base et trois barres de support (63), alignées parallèlement, en métal, de préférence en acier, pour supporter le poids des boîtes de la chambre de chauffe.

12. Appareil selon la revendication 11 dans lequel la chambre de chauffe, parallèlement aux barres de support (63), et à leurs niveaux, est insérée une plaque de support (36), avec une fente ou de quelques fentes de fixation du distributeur (7) à l'aide d'une plaque à crochets (42).

13. Appareil selon la revendication 12 dans lequel la plaque de support (36) sur laquelle est fixé le distributeur (7) est positionnée, de sorte que la plaque de base (39) du distributeur (7) soit située au-dessus des deuxième et troisième quadrants trigonométriques de la zone circulaire de la rôtissoire (A).

14. Appareil selon la revendication 1 dans lequel chaque porte en verre (75) de l'unité de rôtisserie verticale adaptée est équipée du côté intérieur, en partie inférieure, d'une gouttière métallique amovible (74) pour empêcher le liquide qui est projeté sur les portes en verre pendant l'écoulement du liquide sur le contenu de la rôtissoire, s'égoutte sur le sol.

15. Appareil selon la revendication 1 dans lequel le tiroir (68) à l'intérieur duquel est monté le réservoir (5) de liquide, ne comporte pas de plaque inférieure de sorte que sous le tiroir se trouve une plaque chauffante (67) à commande électronique, fixée sur un ensemble de ressorts poussant la plaque sur la surface externe de la plaque inférieure du réservoir de liquide (5), lorsque le tiroir (68) est fermé.
